# EUROPÄISCHE PATENTSCHRIFT

(11) **EP 0 947 132 B1**
(45) Veröffentlichungstag und Bekanntmachung des Hinweises auf die Patenterteilung: **31.08.2005**
(21) Anmeldenummer: 99113475.0
(22) Anmeldetag: 02.04.1997
(51) Int. Cl.: A01K 9/00, A01K 5/02

(54) **Puffer zum Zwischenspeichern von Nahrungsmittel**
Buffer container for intermediatedly storing feedstuff
Conteneur tampon pour le stockage intermédiaire de produits alimentaires

(30) Priorität: 02.08.1996 DE 29613366 U; 02.04.1996 DE 29605928 U
(43) Veröffentlichungstag der Anmeldung: 06.10.1999
(62) Teilanmeldung aus: 97105481.2
(73) Patentinhaber: Förster, Martin, 78234 Engen (DE)
(72) Erfinder: Förster, Martin, 78234 Engen (DE)
(74) Vertreter: Weiss, Peter

(56) Entgegenhaltungen:
- DE-A- 2 229 806
- FR-A- 1 154 433
- FR-A- 2 157 153
- GB-A- 2 155 749
- US-A- 2 190 420
- US-A- 2 280 410
- US-A- 4 620 505

## Beschreibung

Die Erfindung betrifft einen Puffer zum Zwischenspeichern von Nahrunsmittel und Einsetzen in eine Einrichtung zur Versorgung von Haustieren mit einem flüssigen Nahrungsmittel, mit einem Gehäuse zumindest einem Einlass und einem Auslass, wobei ein inneres Volumen des Behälters veränderbar ist.

Bei der heutigen Mast von Kälbern, Ferkeln, Lämmer od. dgl. werden in der Regel Tränkeautomaten verwendet, bei denen beispielsweise ein Milchpulver in Wasser eingemischt und einer Saugstelle zugeführt wird. Das Haustier kann an dieser Saugstelle das flüssige Nahrungsmittel entnehmen, wobei die Zugabe des Nahrungsmittels dosiert erfolgt. Meist befindet sich jedoch in einem Stall eine Mehrzahl von zu fütternden Haustieren, so dass auch eine Mehrzahl von Saugstellen angeordnet sein sollten, damit eine einigermassen gerechte Zuteilung des Nahrungsmittels erfolgt. Bei den bekannten Tränkeautomaten geschieht jedoch das Zuteilen nur durch das Anrühren des flüssigen Nahrungsmittels. Wird beispielsweise ein halber Liter angerührt, so kann das entsprechende Kalb im Maximum diesen halben Liter saufen.

Auch heute gibt es bereits Tränkeautomaten, die mehr als eine Saugstelle mit Nahrungsmittel versorgen. Auch bei diesen Tränkeautomaten wird lediglich eine bestimmte Menge an flüssigem Nahrungsmittel angerührt. Wird an einer Saugstelle gesaugt, so ist die andere Saugstelle abgesperrt, so dass dort ein trinkwilliges Kalb nichts entnehmen kann. Dies ist unerwünscht.

Ferner ist aus dem Stand der Technik bekannt, dass Anmischbehälter gleichzeitig als Messbehälter zu Ermittlung der Verzehrmenge verwendet werden. Dabei werden zwei unterschiedliche Ausführungsmöglichkeiten unterschieden.

Einerseits werden Tränkeautomaten mit mehreren Anmischbehältern verwendet, welche gleichzeitig als Messbehälter dienen. Andererseits sind Tränkeautomaten mit Anrührbehälter bekannt, bei welchen die Tränke bzw. das Nahrungsmittel durch Gefälle oder durch Pumpen in mehrere einzelne Messbehälter befördert wird. Diesen Messbehälter ist dann jeweils eine Saugstelle zugeordnet. Nachteilig daran ist, dass derartige Tränkeautomaten und insbesondere deren offene Messeinrichtungen äusserst aufwendig zu reinigen sind, da dies auf manuelle Weise geschieht. Ferner sind offene Messeinrichtungen aus Hygienegründen nicht besonders geignet, da Narungsmittel schneller verdirbt. Zudem sind derartige Tränkeautomaten sehr kostenintensiv herzustellen und zu warten.

Aus dem Stand der Technik sind Mengenregler und Mengenmesseinrichtungen bekannt, welche den Durchfluss und Flussgeschwindigkeit an Nahrungsmittel messen und regeln. Diese sind äusserst teuer und kompliziert aufgebaut. Da das zu messende Medium bzw. das Nahrungsmittel aus verschiedenen Lebensmittelkomonenten, wie bspw. Wasser,

Milchpulver, Kraftfutter ect. und quellenden Komponenten besteht, deren Zusammensetzungen sich ständig ändern, weist das Nahrunsmittel unterschiedlichste Eigenschaften auf. Ein exaktes Strömungsverhalten bspw. beim Pumpen und beim Meessen zu ermitteln und zu bestimmen ist ohne deratig komplexe und teure Mengenmesseinrichtungen bisher nicht möglich.

Die US 4,620,505 A beschreibt ein Selbstreinigungssystem für Fütterungsautomaten, in welchem ein Vorratsbehälter zum Zuführen von Flüssigkeit an eine Nahrungsmittelquelle zusätzlich angeschlossen ist, welche auf rein mechanische Art und Weise mittels eines Kolbens zusätzliche Flüssigkeiten der Entnahmestelle zuführt.

Die DE 2 229 806 A offenbart eine Fütterungsvorrichtung für Jungvieh, bei welcher ein Nuckel in die Vorrichtung zum Reinigen einschwenkbar ist. Ferner ist dieser Vorrichtung eine Dosiereinrichtung rein mechanischer Art zugeordnet.

Die GB 2 155 749 A offenbart eine Vorrichtung zum Transportieren von Nahrungsmittel aus einem Nahrungsmittelbehälter mittels einer Schlauchpumpe an eine Entnahmestelle, insbesondere einen Nuckel. Zwischen der Schlauchpumpe und dem Nuckel ist ein Reservoir vorgesehen, wobei im Reservoir mittels eines Füllstandsmessers der Füllstand des Reservoirs bestimmbar ist.

Der vorliegenden Erfindung liegt die Aufgabe zugrunde, einen Puffer zu schaffen, der auf einfache und exakte Weise ermittelt wann ein Haustier Nahrung zu sich nehmen möchte. Ferner soll ein derartiger Puffer im Betrieb nicht verschmutzen.

Ferner soll das Ansaugen von Nahrungsmittel an der Saugstelle erleichtert werden, wenn junge Kälber an das Ansaugen angelernt werden müssen. Zudem sollen Herstellungskosten, Wartungs- und insbesondere Reinigungsaufwand reduziert werden.

Zur Lösung dieser Aufgabe führt, dass der Behälter ein volumenveränderndes Element aufweist, welchem ein Sensor und einem Behälterboden ein Schalter zugeordnet ist, wobei das volumenverändernde Element als elastische Membran ausgebildet ist.

In der heutigen Kälberhaltung sind die mit Nahrungsmittel zu versorgenden Haustiere in der Regel mit einem Identifizierelement ausgerüstet, beispielsweise mit einem Transponder. Sobald ein bestimmtes Haustier an eine Saugstelle geht, wird es identifiziert. Mit einem Mengenmesselement kann nun exakt bestimmt werden, welches Haustier wieviel an flüssigem Nahrungsmittel in welcher Zeit zu sich genommen hat. Hierdurch ist es möglich, den Mastvorgang genau zu kontrollieren. Beispielsweise ist es auch möglich, den Gesundheitszustand eines Kalbes zu kontrollieren, wenn es über einen längeren Zeitraum hinweg nicht zur Saugstelle gekommen ist.

Ferner ist es wichtig, das Saugverhalten der einzelnen Tiere individuell zu ermitteln. Kälber haben unterschiedliche Trinkverhalten, insbesondere saugen sie unterschiedlich stark an, so dass die Öffnungszeit allein kein genaues Mass für die getrunkene Menge ist. Auch gibt es Kälber die kurze und sehr starke Saugzüge machen, während andere kaum ziehen, für einen Zug aber sehr lange brauchen.

Desweiteren kann der Saugstelle ein Drucksensor vorgeschaltet sein. Bevorzugt wird er kurz vor der Saugstelle angeordnet. Der Abstand zur Saugstelle ist so bemessen, dass der Sensor die Nahrungsmittelzufuhr kurz vor der Saugstelle durch den Flüssigkeitsdruck abschaltet. Durch Saugen am Nuckel wird die Flüssigkeit angehoben und der Druckschalter schaltet die Förderung von Nahrungsmittel wieder ein. Die verwendeten Magnetventile bzw. Pumpen werden ggfs. über Druck- bzw. Unterdrucksensoren in Betrieb gesetzt.

Wird ein Unterdrucksensor gewählt, so schaltet dieser die Nahrungsmittelzufuhr direkt durch den erzeugten Unterdruck beim Saufen ein.

Wie in der DE-OS 36 13 887 beschrieben, erfolgt die Steuerung der Förderpumpe über einen in der Saugleitung zur Saugstelle herrschenden Unterdruck. D.h., sobald beispielsweise ein Kalb zu saugen beginnt, wird die Förderpumpe eingeschaltet und unterstützt den Strom des flüssigen Nahrungsmittels. Bevorzugt soll im vorliegenden Ausführungsbeispiel noch ein zusätzlicher Schalter in diese Leitung zwischen Unterdrucksensor und Förderpumpe eingeschaltet sein, der es ermöglicht, die Förderpumpe so einzuschalten, dass eine geringe Menge an Nahrungsmittel aus dem Nuckel austritt. Hierdurch wird das Jungtier noch besser zur Nahrungsentnahme angereizt. Ähnlich ist dies auch beim Euter einer Kuh, wenn ein Kalb beispielsweise mit der Schnauze gegen eine Zitze stösst, da auch dann oft eine geringe Menge an Milch aus der Zitze herausspritzt und das Kalb zum Saugen anregt.

Auch bei dem Ausführungsbeispiel mit der Förderpumpe können zwischen Saugstelle und Förderpumpe, wenn dies gewünscht ist, Drucksensoren und Mengenmesselemente eingeschaltet sein, um die Pumpe in Betrieb zu setzen.

In einer oder in beiden Saugleitungen soll ein Puffer, insbesondere Vorratsbehälter, vorgesehen sein, so dass ein Kalb auch nach Abschalten von seiner Leitung noch die ihm ausgegebene Restmenge absaugen kann. Dem Puffer kann zum Steuern der Ventile auch ein Sensor zugeordnet sein.

Ein derariger Puffer besteht im wesentlichen aus einem geschlossenen Behälter, dessen Volumen veränderbar ist. Dabei kann der Behälter bspw. mit einer Membran versehen sein, welche elastisch ausgebildet ist. Aber auch ein Kolben kann anstelle der Membran die in dem Behälter verschiebbar angeordnet sein. Der Puffer hat die Aufgabe eine bestimmte Restmenge an Nahrungsmittel zu speichern. Der Puffer wird mit Nahrungsmittel gefüllt. Anschliessend wird die Zuleitung von dessen Ventil abgesperrt und kann eine weiterere Saugstelle mit einem weiteren Puffer bedienen. Währenddessen kann das Kalb die Menge an flüssigem und im Puffer gespeicherten Nahrungsmittel absaugen. Ist der Behälter entleert, so wird über einen entsprechenden Schalter die Zuleitung zum Puffer, auf ein Signal des Schalters hin, geöffnet und Nahrungsmittel kann erneut in den Puffer einströmen. Dieser Vorgang wiederholt sich.

Alle verwendeten Pumpen werden vor dem Einschalten der Magnetventile in Betrieb gesetzt. Dies geschieht bspw. mittels der Unterdrucksensoren. Damit werden Ungenauigkeiten beim Bestimmen und Messen von Mengen verhindert, da während des Einschaltvorganges die Leistung der Pumpe unterschiedlich ist.

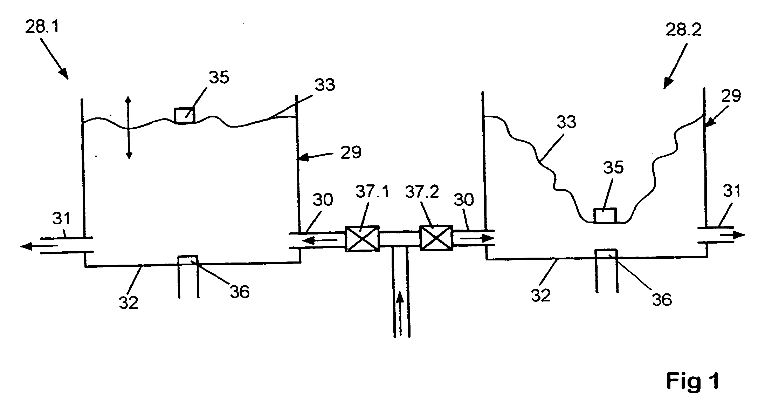

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen schematisch dargestellten Querschnitt eines Puffers zur Speicherung von Nahrungsmittel;

Will ein Haustier Nahrungsmittel entnehmen und beginnt an einer Saugstelle zu saugen, so wird dies durch den Drucksensor erfasst, der über eine Leitung mit einem Ventil verbunden ist. Beispielsweise kann es sich bei dem Drucksensor auch um einen Drucksensor (Membransensor) handeln, der aufgrund des Saugens einen Schaltimpuls an das Ventil abgibt. Das Ventil öffnet zumindest solange wie das Haustier saugt.

Gemäss Figur 1 ist ein Puffer 28.1 aufgezeigt, welcher bei den oben beschriebenen Einrichtungen, bevorzugt zwischen Magnetventilen und Saugstellen , zwischengeschaltet werden kann. Bevorzugt sind zwei Puffer 28.1, 28.2 nebeneinander angeordnet und miteinander über die Einlässe 30 mit dazwischenliegenden Ventilen 37.1, 37.2 verbunden. Diese werden über ein T-Stück mit Nahrungsmittel gespeist. Dabei wird dem einen oder dem anderen Puffer 28.1, 28.2 Nahrungsmittel zugeführt. Das Zuführen von Nahrungsmittel kann im Wechsel erfolgen. So gelangt das Nahrungsmittel in einen geschlossenen Behälter 29, dessen Volumen veränderbar ist. Hier sind verschiedenste Ausgestaltungen derartiger Behälter 29 denkbar.

Ist der Behälter 29 gefüllt, so wird die Nahrungsmittelzufuhr unterbrochen und dass Kalb säuft aus diesem Behälter 29, wobei bspw. eine Membran 33 nachgibt, bis der Behälter 29 durch einen Auslass 31 entleert ist. Diese Membran 33 ist mit einem Sensor 35 bzw. Magneten oder ähnlichem Metallstück versehen, welcher ein Signal an einem Schalter 36 auslöst, wenn die Membran 33 nahe des Behälterbodens 32 anliegt. Während der Behälter 29 ausgesoffen wird, kann ein weiterer Behälter 29 gefüllt werden.

Ist der erste Behälter 29 entleert, so kann der Sensor 35 bspw. mittels der Membran 33 ein Signal abgeben, um die Saugstelle 4 ggfs. über den Puffer 28.1 wieder zu bedienen. Wichtig ist allerdings auch, dass die Öffnungszeiten der Ventile 37.1, 37.2 bei abgeschaltetem Schalter 36 eine gewisse Nachlaufzeit geöffnet bleiben können, um den Behälter 29 des Puffers 28.1, 28.2 optimal auszufüllen bzw. zu nutzen. Somit lassen sich die Magnetventile schonen, bei gleichzeitiger Reduktion ihrer Schalthäufigkeit.

## Patentansprüche

1. Puffer zum Zwischenspeichern von Nahrunsmittel und Einsetzen in eine Einrichtung zur Versorgung von Haustieren mit einem flüssigen Nahrungsmittel, mit einem Gehäuse (29) zumindest einem Einlass (30) und einem Auslass (31), wobei ein inneres Volumen des Behälters (29) veränderbar ist,
**dadurch gekennzeichnet,**
**dass** der Behälter (29) ein volumenveränderndes Element (33, 34) aufweist, welchem ein Sensor (35) und einem Behälterboden (32) ein Schalter (36) zugeordnet ist, wobei das volumenverändernde Element (33) als elastische Membran ausgebildet ist.

2. Puffer nach Anspruch 1, **dadurch gekennzeichnet, dass** zwei benachbarte Puffer (28.1, 28.2) über deren Einlässe (30) und dazwischengeschaltetem Umschaltventil (37) miteinander verbunden sind, wobei die beiden Puffer (28.1, 28.2) jeweils alternierend geschaltet sind.

## Claims

1. Buffer container for intermediately storing feed and for insertion in a means for supplying domestic animals with a liquid feed, said buffer container having a housing (29), at least one inlet (30) and one outlet (31), an internal volume of the container (29) being variable, **characterised in that** the container (29) has a volumetrically-variable element (33, 34), with which a sensor (35) is associated, and a switch (36) is associated with a container base (32), the volumetrically-variable element (33) being in the form of a resilient diaphragm.

2. Buffer container according to claim 1, **characterised in that** two adjacent buffer containers (28.1, 28.2) are interconnected via their inlets (30) and switchover valve (37) interposed therebetween, the two buffer containers (28.1, 28.2) each being switched in an alternating manner.

## Revendications

1. Tampon pour le stockage intermédiaire de produits alimentaires et l'intégration dans un dispositif d'approvisionnement d'animaux domestiques en produits alimentaires liquides, comprenant un récipient (29), au moins une entrée (30) et une sortie (31), le volume intérieur du récipient (29) étant modifiable,
**caractérisé en ce que**
le récipient (29) présente un élément modificateur de volume (33, 34) auquel est associé un capteur (35) tandis qu'à un fond du rédpient (32) est associé un commutateur (36), l'élément modificateur de volume (33) étant configuré sous forme de membrane élastique.

2. Tampon selon la revendication 1.
**caractérisé en ce que**
deux tampons adjacents (28.7, 28.2) sont reliés entre eux par leurs entrées (30) et par une soupape de commutation (37) placée entre elles, les deux tampons (28.1, 28.2) étant chacun activés en alternance.
